# FASCICULE DE BREVET EUROPEEN

(11) **EP 3 035 002 B1**
(45) Date de publication et mention de la délivrance du brevet: **31.01.2018**
(21) Numéro de dépôt: 15199981.0
(22) Date de dépôt: 15.12.2015
(51) Int. Cl.: G01D 5/347

(54) **CODEUR OPTIQUE ROBUSTE**
ROBUSTER OPTISCHER KODIERER
ROBUST OPTICAL ENCODER

(30) Priorité: 17.12.2014 FR 1402877
(43) Date de publication de la demande: 22.06.2016
(73) Titulaire: THALES, 92400 Courbevoie (FR)
(72) Inventeur: TORAILLE, Vincent, 41100 VENDOME (FR); BELLON, Jacques, 41100 VENDOME (FR)
(74) Mandataire: Collet, Alain

(56) Documents cités:
- US-A- 5 283 434
- US-A1- 2010 163 716
- US-A1- 2011 272 566

## Description

L'invention concerne un codeur optique pour lequel on cherche à améliorer la robustesse notamment en termes de compatibilité électromagnétique.

Les codeurs optiques sont présents dans de nombreux équipements électroniques. Ils sont utilisés pour qu'un utilisateur puisse saisir des données. On trouve par exemple des codeurs rotatifs comprenant un bouton rotatif entrainant un disque portant une alternance de zones diffusantes et de zones absorbantes. Le codeur comprend également une carte électronique sur laquelle sont disposées un émetteur et un capteur lumineux. L'émetteur, comme par exemple une diode électroluminescente, émet un rayonnement lumineux en direction du disque. Le capteur permet de détecter le rayonnement lumineux lorsqu'il est réfléchi par une zone diffusante. On peut ainsi obtenir en sortie du capteur un signal binaire représentatif d'une réflexion sur une zone diffusante ou de l'absence de réflexion lorsque le rayonnement lumineux atteint une zone absorbante.

Un utilisateur manoeuvre le bouton pour faire tourner le disque en plaçant sur le trajet optique entre l'émetteur et le capteur soit une zone diffusante soit une zone absorbante.

Des exemples de codeurs optiques sont donnés par les documents US 2010/163716 A1 et US 2011/272566 A1.

La protection d'un équipement électronique vis-à-vis de perturbations électromagnétiques est toujours délicate à réaliser. L'utilisation de parois métalliques reliées électriquement à une masse permet de réaliser un écran de blindage isolant l'équipement de son environnement électromagnétique. Néanmoins lorsque l'équipement comprend des parties mobiles, telles que celles utilisées pour une entrée de données dans un codeur, l'écran de blindage est interrompu pour permettre le passage d'une pièce mobile entre l'intérieur de l'équipement où on trouvera par exemple une carte de circuit imprimé et l'extérieur de l'équipement où la pièce mobile forme un organe manoeuvré par un utilisateur.

L'invention apporte une solution à ce problème en proposant un codeur optique où il est aisé de placer un écran de blindage continu entre la pièce mobile du codeur et la partie électronique où se situe le capteur.

A cet effet, l'invention a pour objet un codeur optique comprenant :
- une pièce mobile portant une zone diffusante et une zone absorbante,
- un émetteur de lumière disposé de façon émettre un rayonnement lumineux en direction de la pièce mobile,
- un capteur sensible à la lumière émise par l'émetteur, le capteur étant disposé de façon à détecter un rayonnement lumineux réfléchi par la zone diffusante, le mouvement de la pièce mobile permettant de placer soit la zone diffusante soit la zone absorbante sur un trajet optique entre l'émetteur et le capteur,
- une plaque formant un guide d'onde optique possédant une première et une seconde faces externes, l'émetteur de lumière étant disposé de façon à émettre le rayonnement lumineux dans le guide d'onde optique, le rayonnement lumineux se réfléchissant totalement entre la première face et la seconde face, le guide d'onde optique étant disposé entre la pièce mobile et le capteur, la pièce mobile étant disposée du coté de la première face, le capteur étant disposé du coté de la seconde face, la première face comprenant une première zone altérée configurée pour qu'une partie du rayonnement lumineux sorte du guide d'onde optique par la zone altérée en direction de la pièce mobile, le guide d'onde optique étant traversé par le rayonnement lumineux réfléchi par la zone diffusante.

La présence du guide d'onde optique permet déjà d'isoler physiquement la pièce mobile du capteur, par exemple pour protéger le capteur de la poussière. L'isolation peut aussi être électromagnétique et à cet effet, le codeur optique comprend un écran de blindage électrique disposé sur la surface de la plaque, l'écran de blindage électrique étant transparent au rayonnement lumineux.

Le codeur optique peut comprendre au moins un cache permettant de protéger le capteur d'un rayonnement parasite ne provenant pas de la pièce mobile.

Le cache peut être formé par un masque opaque au rayonnement lumineux, le masque recouvrant la plaque à l'exception d'un trou réalisé en regard du capteur.

La zone altérée peut comprendre des moyens de focalisation du rayonnement lumineux extrait par la face autour d'une direction perpendiculaire au plan du guide d'onde optique. La zone altérée peut être formée par rupture géométrique locale de la première face, la rupture géométrique locale perturbant la réflexion totale du rayonnement lumineux dans le guide d'onde optique. La première face du guide d'onde peut comprendre une seconde zone altérée distincte de la première zone altérée de façon à ce qu'une partie du rayonnement lumineux sorte du guide d'onde optique par la seconde zone altérée de façon à éclairer une légende associée à la pièce mobile.

L'émetteur de lumière est appelé premier émetteur. Le codeur comprend avantageusement un second émetteur de lumière disposé de façon à émettre un rayonnement lumineux dans le guide d'onde optique, le premier et le second émetteurs de lumière émettant chacun dans une bande de longueur d'onde, les deux bandes étant distinctes. Le capteur est alors configuré pour détecter une onde de la bande de longueur d'onde du premier émetteur et la bande de longueur d'onde du second émetteur est utilisée pour sortir du guide d'onde par la seconde zone altérée.

Dans un mode de réalisation permettant d'améliorer le rapport signal sur bruit d'un signal issu du codeur, le codeur optique peut comprendre un second capteur, le second capteur étant apte à détecter un rayonnement lumineux réfléchi par une des zones de la pièce mobile, le second capteur étant disposé de façon à ce que lorsqu'un des deux capteurs reçoit un rayonnement lumineux réfléchi par une zone diffusante, l'autre des deux capteurs est en regard d'une zone absorbante et inversement.

Dans un autre mode de réalisation permettant une redondance des informations issus du codeur, le codeur optique comprend plusieurs capteurs disposés de façon à pouvoir tous recevoir un rayonnement réfléchi par une même zone diffusante.

Avantageusement, le codeur comprend une source de lumière pilotée par un signal issu du capteur et permettant un retour d'information vers l'utilisateur en fonction de mouvements de la pièce mobile.

La source de lumière permettant le retour d'information est par exemple disposée de façon à émettre de la lumière perpendiculairement à la plaque en la traversant.

La source de lumière permettant le retour d'information peut émettre dans une bande de longueur d'onde distincte de celle pour laquelle le capteur est configuré.

L'invention sera mieux comprise et d'autres avantages apparaîtront à la lecture de la description détaillée d'un mode de réalisation donné à titre d'exemple, description illustrée par le dessin joint dans lequel :
la figure 1 représente en coupe un exemple de codeur optique conforme à l'invention ;
la figure 2 représente une pièce mobile du codeur optique de la figure 1 ;
les figures 3a à 3d représentent schématiquement un codeur dans différentes positions de la pièce mobile ;
la figure 4 représente en perspective un guide d'onde du codeur optique.

Par souci de clarté, les mêmes éléments porteront les mêmes repères dans les différentes figures.

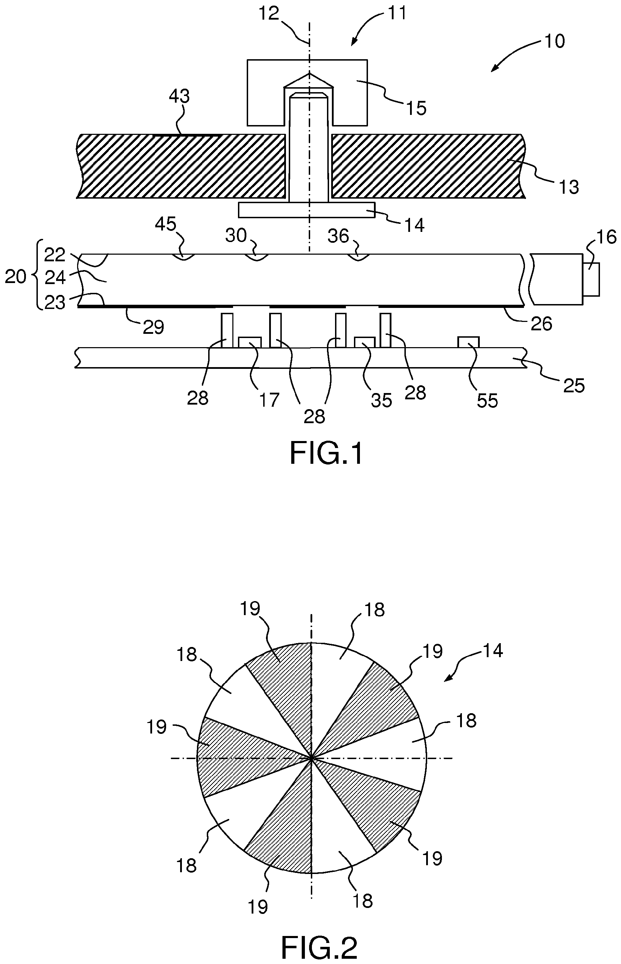

La figure 1 représente un codeur optique 10 comprenant une pièce mobile 11. Dans l'exemple représenté, la partie 11 est mobile en rotation autour d'un axe 12. Alternativement, l'invention peut être mise en oeuvre dans un codeur optique comprenant une pièce mobile en translation. La partie 11 est mobile par rapport à un support 13. La pièce mobile 11 comprend un disque 14 solidaire d'un bouton 15 destiné à être manoeuvré par un utilisateur. La manoeuvre du bouton 15 permet à l'utilisateur de saisir des données. Le support 13 est par exemple une plaque formant une paroi d'un équipement électronique auquel appartient le codeur optique 10. Le bouton 15 est situé à l'extérieur du support 13 pour être manoeuvré par l'utilisateur et le disque est situé à l'intérieur du support 13. La pièce mobile 11, formée par le disque 14 et le bouton 15, est reliée au support par une liaison pivot d'axe 12.

Le codeur optique 10 comprend un émetteur 16 de lumière et un capteur 17 sensible au rayonnement lumineux émis par l'émetteur 16. L'émetteur de lumière 16 est disposé de façon émettre son rayonnement lumineux en direction de la pièce mobile 11 et plus précisément en direction du disque 14.

La figure 2 représente le disque 14 perpendiculairement à son axe de rotation 12. Le disque 14 porte au moins une zone diffusante 18 et une zone absorbante 19. Dans l'exemple représenté, le disque 14 porte cinq zones diffusantes 18 et cinq zones absorbantes 19. Les zones diffusantes 18 et absorbantes 19 sont alternées. Dans la pratique un codeur optique selon l'invention peut comprendre un plus grand nombre de zones diffusantes et absorbantes. Néanmoins l'invention peut être mise en oeuvre avec une seule zone diffusante 18 et une seule zone absorbante 19. Dans l'exemple représenté, les zones diffusantes 18 et absorbantes 19 forment sur le disque 14 des secteurs angulaires répartis autour de l'axe 12.

L'émetteur de lumière 16 est disposé de façon émettre en direction de la pièce mobile 11 et le capteur 17 est disposé de façon à détecter un rayonnement lumineux réfléchi par une des zones diffusantes 18. La rotation du disque 14 permet de placer soit une zone diffusante 18, soit une zone absorbante 19 sur le trajet optique entre l'émetteur 16 et le capteur 17.

Selon l'invention, le codeur optique comprend une plaque 20 transparente au rayonnement lumineux provenant de l'émetteur 16 et traversée par le trajet optique. Plus précisément, la plaque 20 est disposée entre le disque 14 et le capteur 17. La plaque 20 sépare le capteur 17 du disque 14. Le support 13 est par exemple plan au voisinage de la pièce mobile 11. La plaque 20 est par exemple parallèle au plan du support 13.

Le capteur 17 peut être disposé sur un circuit imprimé 25 plan, parallèle à la plaque 20. Le capteur 17 est par exemple une photodiode sensible au rayonnement lumineux provenant de l'émetteur 16 et le cas échéant réfléchi par le disque 14. Le capteur 17 forme un signal représentatif de la position angulaire de la pièce mobile 11 par rapport au support 13. Dans le cas d'une photodiode utilisée comme capteur, le signal représentatif est électrique et peut être traité par d'autres composants disposés sur le circuit imprimé 25. Le courant issu d'une photodiode peut être traité au moyen d'un convertisseur courant tension suivi d'un amplificateur opérationnel comparant la tension générée par le convertisseur à un seuil. A la sortie de l'amplificateur opérationnel un signal binaire et disponible représentant la position angulaire du disque 14, avec une zone diffusante 18 sur le trajet optique pour l'un des niveaux binaires et une zone absorbante 19 sur le trajet optique pour l'autre des niveaux binaires. A titre d'alternative, d'autres types de capteurs peuvent être mis en oeuvre dans le cadre de l'invention, comme par exemple un capteur délivrant un signal optique.

Avantageusement, le codeur optique 10 comprend un écran de blindage électrique 26 disposé sur la surface de la plaque, l'écran de blindage étant transparent au rayonnement lumineux. L'écran de blindage peut être disposé sur l'une des deux faces de la plaque 20 soit coté disque 14, soit coté circuit imprimé 25. L'écran de blindage 26 est par exemple réalisé au moyen d'une électrode conductrice transparente disposée sur la plaque 20. Cette électrode est par exemple réalisée en oxyde d'indium dopé à l'étain bien connu sous le nom d'ITO pour son abréviation anglo-saxonne : « Indium tin oxide ». D'autres technologies peuvent être mises en oeuvre pour réaliser l'écran de blindage 26, telle que par exemple la mise en oeuvre d'un film transparent incorporant une grille conductrice. Ce type de film est connu dans la littérature anglo-saxonne sous le nom de « micro mesh film ». L'écran de blindage 20 recouvre avantageusement toute la surface de la plaque 20 et est raccordé à une masse électrique du codeur optique 10, par exemple par l'intermédiaire du circuit imprimé 25.

Afin d'éviter que le capteur 17 ne détecte un rayonnement lumineux ne provenant pas du disque 14, le codeur optique 10 peut comprendre au moins un cache permettant de protéger le capteur 17 d'un rayonnement parasite ne provenant pas d'une réflexion sur une zone diffusante 18. Plusieurs variantes de cache sont représentées sur la figure 1. Le cache peut être formé par un mur 28 disposé sur le circuit imprimé 25 au voisinage du capteur 17. Il est également possible de prévoir un mur entourant le capteur 17. Le cache peut également être formé par un masque 29 opaque au rayonnement lumineux issu de l'émetteur 16 et disposé sur la surface de la plaque 20 faisant face au circuit imprimé 25. Le masque 29 peut recouvrir l'ensemble de la plaque 20 à l'exception d'un trou, par exemple circulaire, centré sur l'emplacement du capteur 17.

La plaque est formée par un guide d'onde optique plan 20. L'émetteur 16 est disposé de façon à émettre le rayonnement lumineux dans le guide d'onde 20. Dans l'exemple représenté, l'émetteur 16 est disposé sur la tranche du guide d'onde 20. L'émetteur 16 peut alternativement être placé à distance du guide d'onde 20. Le guide d'onde 20 permet de guider une onde électromagnétique, comme par exemple une onde lumineuse, dans une couche centrale 24, limitée par deux faces externes 22 et 23. L'indice de réfraction de la couche centrale 24 est supérieur à celui du milieu dans lequel est placé le guide d'onde 20, comme notamment de l'air. On obtient ainsi une réflexion totale de l'onde se propageant dans la couche centrale 24 sur les deux faces externes 22 et 23.Le guide d'onde 20 est par exemple réalisé en verre ou en poly méthacrylate de méthyle connu sous le nom abrégé PMMA, provenant de son abréviation anglo-saxonne : « Polymethyl methacrylate ».

La première face 22 comprend une première zone altérée 30 configurée pour qu'une partie du rayonnement lumineux sorte du guide d'onde par la zone altérée 30 en direction de la pièce mobile 14.

La zone altérée peut être réalisée au moyen d'une peinture diffusante disposée sur la face 22. Avantageusement, la zone altérée comprend des moyens de focalisation de la lumière extraite par la face 22 autour d'une direction perpendiculaire au plan du guide d'onde 20. Les moyens de focalisation sont par exemple formés par un film micro prisme, bien connu dans la littérature anglo-saxonne sous le nom de BEF pour l'abréviation de : « Brightness Enhancement Film ». Les moyens de focalisation permettent de guider la lumière extraite du guide d'onde 20 vers le disque 14.

Alternativement, la zone altérée 30 est formée par une rupture géométrique locale de la première face 22, la rupture géométrique perturbant la réflexion totale du rayonnement lumineux dans le guide d'onde 20. Cette rupture peut être réalisée en creux dans la face 22. Il peut s'agir de l'inclusion dans la face 22 d'un matériau d'indice de réfraction différent de celui de la face 22.

Dans un mode de réalisation avantageux, le codeur optique 10 comprend deux capteurs associés chacun à une zone du disque. Sur la figure 1, le premier capteur porte le repère 17 et le second capteur porte le repère 35. Les capteurs 17 et 35 sont disposés de façon à ce que lorsqu'un des capteurs reçoit un rayonnement lumineux réfléchi par une zone diffusante 18, l'autre capteur est en regard d'une zone absorbante 19 et inversement. Autrement dit, lorsqu'un des capteurs est éclairé l'autre ne l'est pas. Les signaux générés par les deux capteurs 17 et 35 sont alors opposés. Il est possible de traiter les deux signaux de façon différentielle afin d'améliorer le rapport signal sur bruit du codeur 10.

A chacun des capteurs 17 et 35, peut être associé un émetteur particulier, par exemple disposé sur le circuit imprimé 25 au voisinage du capteur correspondant. Lorsque la plaque 20 est formée par un guide d'onde plan, comme représenté sur la figure 1, la face 22 comprend une seconde zone altérée 36 configurée pour qu'une partie du rayonnement lumineux sorte du guide d'onde 20 par la zone altérée 36 en direction de la pièce mobile 11 afin d'y être le cas échéant réfléchi vers le second capteur 35. La seconde zone altérée 36 peut être identique à la zone altérée 30.

Il est également possible d'assurer une redondance du signal issu du codeur optique 10 au moyen de deux capteurs disposés de façon à détecter simultanément un rayonnement lumineux réfléchi par une même zone diffusante 18 ou par deux zones diffusantes 18 distinctes. La disposition des deux capteurs est telle que lors d'un mouvement du disque 14 les deux capteurs détectent simultanément soit un rayonnement lumineux réfléchi soit une absence de réflexion.

Dans les variantes décrites plus haut avec un ou plusieurs capteurs, les zones diffusantes 18 et absorbantes 19 sont régulièrement disposées. La résolution du codeur optique 10 est égale au pas des zones diffusantes 18 et absorbantes 19. Il est possible d'augmenter la résolution du codeur optique 10 en disposant au moins deux capteurs pouvant être en regard d'une même zone.

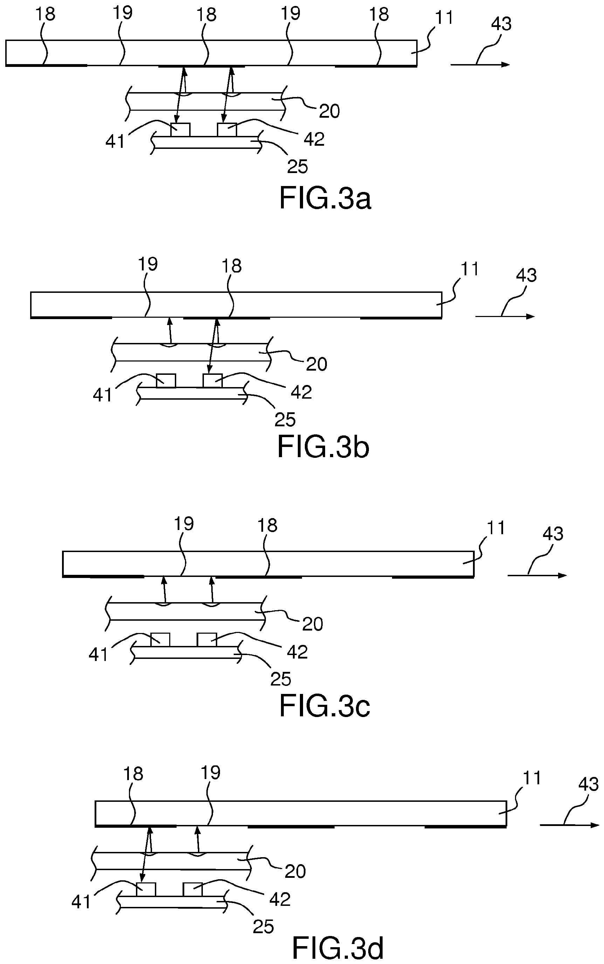

Cette variante est illustrée à l'aide des figures 3a à 3d. La pièce mobile 11 peut ici se déplacer dans un mouvement de translation. Il est bien entendu possible de transposer cette représentation pour un mouvement de rotation. A l'aide de deux capteurs 41 et 42, lors d'un mouvement de la pièce mobile 11 dans un sens repéré 43, on peut avoir successivement, les deux capteurs 41 et 42 éclairés, comme illustré sur la figure 3a ; le capteur 42 éclairé et le capteur 41 non éclairé, comme illustré sur la figure 3b ; les deux capteurs 41 et 42 non éclairés, comme illustré sur la figure 3c ; et enfin le capteur 42 non éclairé et le capteur 41 éclairé, comme illustré sur la figure 3d. Cette disposition permet de doubler la résolution du codeur optique et plus généralement de multiplier la résolution initiale donnée par le nombre de zones diffusantes 18 et absorbantes 19 par le nombre de capteurs susceptibles de détecter simultanément une même zone. Cette disposition permet aussi de déterminer le sens du mouvement de la pièce mobile 11 en comparant la variation de signal dans le temps.

Lorsque la plaque 20 est formée par un guide d'onde, il est possible d'utiliser le guide d'onde pour rétro éclairer la pièce mobile 11 ou son environnement immédiat, notamment pour éclairer une légende 43 précisant par exemple le type de données que l'utilisateur peut saisir à l'aide du codeur optique 10. La légende peut être un texte et/ou un symbole reconnaissable par l'utilisateur. A cet effet, la première face 22 du guide d'onde 20 comprend une autre zone altérée 45 distincte de la ou des zones altérées 30 et 36 de façon à ce qu'une partie du rayonnement lumineux sorte du guide d'onde 20 par la zone altérée 45 de façon à éclairer la légende 43 associée à la pièce mobile 11. Cette partie du rayonnement lumineux traverse le support 13 qui est transparent au moins au niveau de cette traversée.

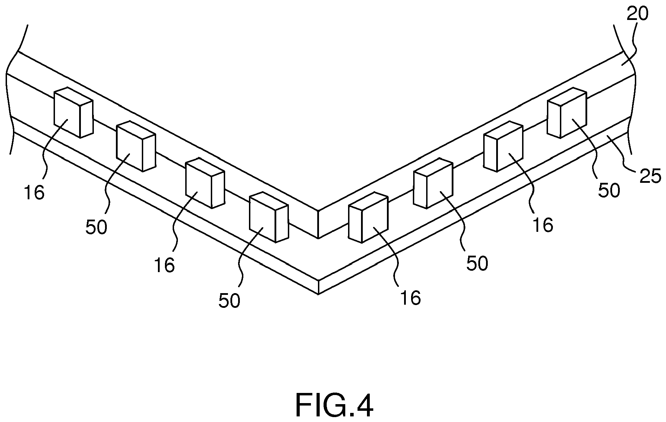

La figure 4 représente schématiquement un codeur optique 10 en perspective. Sur cette figure sont représentées des émetteurs permettant de générer le rayonnement lumineux propagé dans le guide d'onde 20. Le codeur optique 10 est plan et s'étend par exemple selon une surface parallélépipédique. Les émetteurs peuvent être formés de diodes électroluminescentes disposées sur le pourtour du guide d'onde 20 et l'éclairant par sa tranche. Les émetteurs peuvent être tous identiques et n'émettre tous que sur la même longueur d'onde.

Alternativement, il est possible de différentier les émetteurs en fonction de leur utilisation. Plus précisément, on peut utiliser des émetteurs de longueurs d'onde différentes pour la fonction de codage optique et pour le rétro éclairage du codeur optique 10. Par exemple, on peut mettre en oeuvre des diodes 16 émettant dans une bande infrarouge pour la fonction de codage optique et des diodes 50 émettant dans une bande de longueur d'onde visible pour le rétro éclairage. Les deux types de diodes sont par exemple alternés sur le pourtour du guide d'onde. La proportion des diodes émettant dans chacune des bandes est adaptée en fonction du besoin. Ainsi, on réduit le risque d'interférence entre le rétro éclairage et la fonction de codage optique. Le ou les capteurs sont également adaptés à détecter la bande de longueur d'onde choisie pour les diodes 16 prévues pour la fonction de codage optique. Sur la figure 3, des diodes 16 émettent dans l'infrarouge et des diodes 50 émettent dans une bande de longueur visible.

On peut avantageusement mettre à profit la présence du guide d'onde pour permettre un retour d'information vers l'utilisateur en fonction des mouvements de la pièce mobile 11. A cet effet, le codeur optique comprend une source de lumière 55 pilotée par un signal issu du ou des capteurs. Cette source de lumière 45 est activée en fonction de la rotation du disque 14.

La source de lumière 55 peut être disposée de façon à émettre dans le guide d'onde 20. La source de lumière 55 est alors disposée en périphérie du guide d'onde 20 comme les émetteurs 16 et 50. Alternativement, la source de lumière 55 est disposée de façon à émettre de la lumière perpendiculairement à la plaque 20 (ou le guide d'onde) en la traversant. Cette alternative est bien adaptée à un codeur optique multiple présentant plusieurs pièces mobiles 11 distinctes ou a un codeur partageant la plaque 20 (ou le guide d'onde) avec d'autres dispositifs et pour lequel on souhaite un retour d'information distinct pour chacun dispositifs. La source de lumière 55 est par exemple formée d'une ou plusieurs diodes électroluminescentes disposées sur le circuit imprimé 25 à proximité du capteur 17 ou 35. Le mur 28 peut séparer la source de lumière 55 du capteur. Alternativement ou en complément, comme pour la ségrégation entre le rétro éclairage et la fonction de codage optique, le capteur peut être insensible à la lumière émise par la source de lumière 55. De même, il est possible de différentier la couleur du rétro éclairage de celle du retour d'information. Par exemple le ou les capteurs 17 et 35 peuvent travailler dans l'infrarouge, le rétro éclairage dans le rouge et le retour d'information dans le vert. Il est possible de prévoir plusieurs couleurs différentes pour différents retours d'information.

## Revendications

1. Codeur optique comprenant une pièce mobile (11) portant une zone diffusante (18) et une zone absorbante (19), un émetteur de lumière (16) disposé de façon émettre un rayonnement lumineux en direction de la pièce mobile (11) et un capteur (17, 35 ; 41, 42) sensible à la lumière émise par l'émetteur (16), le capteur (17, 35 ; 41, 42) étant disposé de façon à détecter un rayonnement lumineux réfléchi par la zone diffusante (18), le mouvement de la pièce mobile (11) permettant de placer soit la zone diffusante (18) soit la zone absorbante (19) sur un trajet optique entre l'émetteur (16) et le capteur (17, 35; 41, 42), **caractérisé en ce qu'**il comprend en outre une plaque (20) formant un guide d'onde optique (20), l'émetteur (16) étant disposé de façon à émettre le rayonnement lumineux dans le guide d'onde (20), **en ce que** le guide d'onde optique (20) possède une première et une seconde faces externes (22, 23), le rayonnement lumineux se réfléchissant totalement entre les deux faces (22, 23), **en ce que** le guide d'onde optique (20) est disposé entre la pièce mobile (11) et le capteur (17, 35 ; 41, 42), la pièce mobile (11) étant disposée du coté de la première face (22), le capteur (17, 35 ; 41, 42) étant disposé du coté de la seconde face (23), **en ce que** la première face (22) comprend une première zone altérée (30, 36) configurée pour qu'une partie du rayonnement lumineux sorte du guide d'onde optique (20) par la zone altérée (30, 36) en direction de la pièce mobile (11) et **en ce que** le guide d'onde optique (20) est traversé par le rayonnement lumineux réfléchi par la zone diffusante (18).

2. Codeur optique selon la revendication 1, **caractérisé en ce qu'**il comprend un écran de blindage électrique (26) disposé sur la surface de la plaque (20), l'écran de blindage électrique (26) étant transparent au rayonnement lumineux.

3. Codeur optique selon l'une des revendications précédentes, **caractérisé en ce qu'**il comprend au moins un cache (28, 29) permettant de protéger le capteur (17, 35 ; 41, 42) d'un rayonnement parasite ne provenant pas de la pièce mobile (11).

4. Codeur optique selon la revendication 3, **caractérisé en ce que** le cache est formé par un masque (29) opaque au rayonnement lumineux, le masque (29) recouvrant la plaque (20) à l'exception d'un trou réalisé en regard du capteur (17, 35 ; 41, 42).

5. Codeur optique selon l'une des revendications précédentes, **caractérisé en ce que** la zone altérée (30, 36) comprend des moyens de focalisation du rayonnement lumineux extrait par la face (22) autour d'une direction perpendiculaire au plan du guide d'onde optique (20).

6. Codeur optique selon l'une des revendications précédentes, **caractérisé en ce que** la zone altérée (30, 36) est formée par rupture géométrique locale de la première face (22), la rupture géométrique locale perturbant la réflexion totale du rayonnement lumineux dans le guide d'onde optique (20).

7. Codeur optique selon l'une des revendications précédentes, **caractérisé en ce que** la première face (22) du guide d'onde optique (20) comprend une seconde zone altérée (45) distincte de la première zone altérée (30, 36) de façon à ce qu'une partie du rayonnement lumineux sorte du guide d'onde optique (20) par la seconde zone altérée (45) de façon à éclairer une légende (43) associée à la pièce mobile (11).

8. Codeur optique selon la revendication 7, **caractérisé en ce que** l'émetteur (16) est appelé premier émetteur, **en ce qu'**il comprend un second émetteur de lumière (50) disposé de façon à émettre un rayonnement lumineux dans le guide d'onde (20), le premier et le second émetteurs de lumière (16, 50) émettant chacun dans une bande de longueur d'onde, les deux bandes étant distinctes, **en ce que** le capteur (26, 27) est configuré pour détecter une onde de la bande de longueur d'onde du premier émetteur (16) et **en ce que** la bande de longueur d'onde du second émetteur (50) est utilisée pour sortir du guide d'onde optique (20) par la seconde zone altérée (45).

9. Codeur optique selon l'une des revendications précédentes, **caractérisé en ce qu'**il comprend un second capteur (35), le second capteur (35) étant apte à détecter un rayonnement lumineux réfléchi par une des zones (18, 19) de la pièce mobile (11), le second capteur (35) étant disposé de façon à ce que lorsqu'un des deux capteurs (17, 35) reçoit un rayonnement lumineux réfléchi par une zone diffusante (18), l'autre des deux capteurs (17, 35) est en regard d'une zone absorbante (19) et inversement.

10. Codeur optique selon l'une des revendications précédentes, **caractérisé en ce qu'**il comprend plusieurs capteurs (41, 42) disposés de façon à pouvoir tous recevoir un rayonnement réfléchi par une même zone diffusante (18).

11. Codeur optique selon l'une des revendications précédentes, **caractérisé en ce qu'**il comprend une source de lumière (55) pilotée par un signal issu du capteur (17, 35 ; 41, 42) et permettant un retour d'information vers l'utilisateur en fonction de mouvements de la pièce mobile (11).

12. Codeur optique selon la revendication 11, **caractérisé en ce que** la source de lumière (55) permettant le retour d'information est disposée de façon à émettre de la lumière perpendiculairement à la plaque (20) en la traversant.

13. Codeur optique selon l'une quelconque des revendications 11 ou 12, **caractérisé en ce que** la source de lumière (55) permettant le retour d'information émet dans une bande de longueur d'onde distincte de celle pour laquelle le capteur (26, 27) est configuré.

## Patentansprüche

1. Optischer Codierer, der Folgendes umfasst: einen beweglichen Teil (11), der eine Diffusionszone (18) und eine Absorptionszone (19) trägt, einen Lichtemitter (16), der so angeordnet ist, dass er Lichtstrahlung in Richtung des beweglichen Teils (11) emittiert, und einen Sensor (17, 35; 41, 42), der für das vom Emitter (16) emittierte Licht empfindlich ist, wobei der Sensor (17, 35; 41, 42) so angeordnet ist, dass er von der Diffusionszone (18) reflektierte Lichtstrahlung erkennt, wobei die Bewegung des beweglichen Teils (11) die Platzierung entweder der Diffusionszone (18) oder der Absorptionszone (19) auf einem Lichtweg zwischen dem Emitter (16) und dem Sensor (17, 35; 41, 42) zulässt, **dadurch gekennzeichnet, dass** er ferner eine Platte (20) umfasst, die einen optischen Wellenleiter (20) bildet, wobei der Emitter (16) so angeordnet ist, dass er die Lichtstrahlung in den Wellenleiter (20) emittiert, dadurch, dass der optische Wellenleiter (20) eine erste und eine zweite Außenfläche (22, 23) hat, wobei die Lichtstrahlung zwischen den beiden Flächen (22, 23) total reflektiert wird, dadurch, dass der optische Wellenleiter (20) zwischen dem beweglichen Teil (11) und dem Sensor (17, 35; 41, 42) angeordnet ist, wobei der bewegliche Teil (11) auf der Seite der ersten Fläche (22) angeordnet ist, wobei der Sensor (17, 35; 41, 42) auf der Seite der zweiten Fläche (23) angeordnet ist, dadurch, dass die erste Fläche (22) eine erste veränderte Zone (30, 36) umfasst, die so konfiguriert ist, dass ein Teil der Lichtstrahlung den optischen Wellenleiter (20) über die veränderte Zone (30, 36) in Richtung des beweglichen Teils (11) verlässt, und dadurch, dass der optische Wellenleiter (20) von der von der Diffusionszone (18) reflektierten Lichtstrahlung durchquert wird.

2. Optischer Codierer nach Anspruch 1, **dadurch gekennzeichnet, dass** er eine elektrische Abschirmung (26) umfasst, die auf der Oberfläche der Platte (20) angeordnet ist, wobei die elektrische Abschirmung (26) für die Lichtstrahlung transparent ist.

3. Optischer Codierer nach einem der vorherigen Ansprüche, **dadurch gekennzeichnet, dass** er wenigstens eine Abdeckung (28, 29) umfasst, die es zulässt, den Sensor (17, 35; 41, 42) vor parasitärer Strahlung zu schützen, die nicht von dem beweglichen Teil (11) stammt.

4. Optischer Codierer nach Anspruch 3, **dadurch gekennzeichnet, dass** die Abschirmung von einer für die Lichtstrahlung opaken Maske (29) gebildet wird, wobei die Maske (29) die Platte (20) mit Ausnahme eines Lochs bedeckt, das sich gegenüber dem Sensor (17, 35; 41, 42) befindet.

5. Optischer Codierer nach einem der vorherigen Ansprüche, **dadurch gekennzeichnet, dass** die veränderte Zone (30, 36) Mittel zum Fokussieren der durch die Fläche (22) extrahierten Lichtstrahlung um eine Richtung lotrecht zur Ebene des optischen Wellenleiters (20) umfasst.

6. Optischer Codierer nach einem der vorherigen Ansprüche, **dadurch gekennzeichnet, dass** die veränderte Zone (30, 36) durch lokales geometrisches Brechen der ersten Fläche (22) gebildet wird, wobei das lokale geometrische Brechen die Totelreflexion der Lichtstrahlung im optischen Wellenleiter (20) unterbricht.

7. Optischer Codierer nach einem der vorherigen Ansprüche, **dadurch gekennzeichnet, dass** die erste Fläche (22) des optischen Wellenleiters (20) eine zweite veränderte Zone (45) separat von der ersten veränderten Zone (30, 36) umfasst, so dass ein Teil der Lichtstrahlung den optischen Wellenleiter (20) über die zweite veränderte Zone (45) verlässt, um eine mit dem beweglichen Teil (11) assoziierten Legende (43) zu beleuchten.

8. Optischer Codierer nach Anspruch 7, **dadurch gekennzeichnet, dass** der Emitter (16) erster Emitter genannt wird, dadurch, dass er einen zweiten Lichtemitter (50) umfasst, der so angeordnet ist, dass er Lichtstrahlung in den Wellenleiter (20) emittiert, wobei der erste und der zweite Lichtemitter (16, 50) jeweils in einem Wellenlängenband emittieren, wobei die beiden Bänder separat sind, dadurch, dass der Sensor (26, 27) zum Erkennen einer Welle des Wellenlängenbandes des ersten Emitters (16) konfiguriert ist, und dadurch, dass das Wellenlängenband des zweiten Emitters (50) für den Austritt aus dem optischen Wellenleiter (20) über die zweite veränderte Zone (45) benutzt wird.

9. Optischer Codierer nach einem der vorherigen Ansprüche, **dadurch gekennzeichnet, dass** er einen zweiten Sensor (35) umfasst, wobei der zweite Sensor (35) von einer der Zonen (18, 19) des beweglichen Teils (11) reflektierte Lichtstrahlung erkennen kann, wobei der zweite Sensor (35) so angeordnet ist, dass, wenn einer der beiden Sensoren (17, 35) von einer Diffusionszone (18) reflektierte Lichtstrahlung erhält, der andere der beiden Sensoren (17, 35) einer Absorptionszone (19) zugewandt ist, und umgekehrt.

10. Optischer Codierer nach einem der vorherigen Ansprüche, **dadurch gekennzeichnet, dass** er mehrere Sensoren (41, 42) umfasst, die so angeordnet sind, dass sie eine von derselben Diffusionszone (18) reflektierte Strahlung empfangen können.

11. Optischer Codierer nach einem der vorherigen Ansprüche, **dadurch gekennzeichnet, dass** er eine Lichtquelle (55) umfasst, die von einem von dem Sensor (17, 35; 41, 42) kommenden Signal gesteuert wird und eine Rückmeldung von Informationen zum Benutzer in Abhängigkeit von Bewegungen des beweglichen Teils (11) zulässt.

12. Optischer Codierer nach Anspruch 11, **dadurch gekennzeichnet, dass** die die Rückmeldung von Informationen zulassende Lichtquelle (55) so angeordnet ist, dass sie Licht lotrecht zur Platte (20) beim Durchqueren der Platte emittiert.

13. Optischer Codierer nach einem der Ansprüche 11 oder 12, **dadurch gekennzeichnet, dass** die die Rückmeldung von Informationen zulassende Lichtquelle (55) in einem Wellenlängenband emittiert, das von dem separat ist, für das der Sensor (26, 27) konfiguriert ist.

## Claims

1. An optical encoder comprising a movable part (11) supporting a diffusing zone (18) and an absorbing zone (19), a light emitter (16) that is disposed so as to emit light radiation towards the movable part (11) and a sensor (17, 35; 41, 42) that is sensitive to the light emitted by the emitter (16), the sensor (17, 35; 41, 42) being disposed so as to detect light radiation that is reflected by the diffusing zone (18), the movement of the movable part (11) allowing either the diffusing zone (18) or the absorbing zone (19) to be placed on an optical path between the emitter (16) and the sensor (17, 35; 41, 42), **characterised in that** it further comprises a plate (20) forming an optical waveguide (20), the emitter (16) being disposed so as to emit the light radiation into the waveguide (20), **in that** the optical waveguide (20) has a first and a second external faces (22, 23), the light radiation totally reflecting between the two faces (22, 23), **in that** the optical waveguide (20) is disposed between the movable part (11) and the sensor (17, 35; 41, 42), the movable part (11) being disposed on the side of the first face (22), the sensor (17, 35; 41, 42) being disposed on the side of the second face (23), **in that** the first face (22) comprises a first altered zone (30, 36) that is configured so that part of the light radiation exits the optical waveguide (20) via the altered zone (30, 36) towards the movable part (11), and **in that** the optical waveguide (20) is passed through by the light radiation that is reflected by the diffusing zone (18).

2. The optical encoder according to claim 1, **characterised in that** it comprises an electrical shielding screen (26) that is disposed on the surface of the plate (20), the electrical shielding screen (26) being transparent to the light radiation.

3. The optical encoder according to any one of the preceding claims, **characterised in that** it comprises at least one shield (28, 29) allowing the sensor (17, 35; 41, 42) to be protected from stray radiation not originating from the movable part (11).

4. The optical encoder according to claim 3, **characterised in that** the shield is formed by a mask (29) that is opaque to the light radiation, the mask (29) covering the plate (20) except for a hole that is made opposite the sensor (17, 35; 41, 42).

5. The optical encoder according to any one of the preceding claims, **characterised in that** the altered zone (30, 36) comprises means for focusing the light radiation extracted via the face (22) around a direction perpendicular to the plane of the optical waveguide (20).

6. The optical encoder according to any one of the preceding claims, **characterised in that** the altered zone (30, 36) is formed by local geometric fracturing of the first face (22), the local geometric fracturing disrupting the total reflection of the light radiation in the optical waveguide (20).

7. The optical encoder according to any one of the preceding claims, **characterised in that** the first face (22) of the optical waveguide (20) comprises a second altered zone (45) separate from the first altered zone (30, 36) so that part of the light radiation exits the optical waveguide (20) via the second altered zone (45) so as to illuminate a legend (43) that is associated with the movable part (11).

8. The optical encoder according to claim 7, **characterised in that** the emitter (16) is called first emitter, **in that** it comprises a second light emitter (50) that is disposed so as to emit light radiation into the waveguide (20), the first and the second light emitters (16, 50) each emitting in one wavelength band, the two bands being separate, **in that** the sensor (26, 27) is configured to detect a wave of the wavelength band of the first emitter (16) and **in that** the wavelength band of the second emitter (50) is used for exiting the optical waveguide (20) via the second altered zone (45).

9. The optical encoder according to any one of the preceding claims, **characterised in that** it comprises a second sensor (35), the second sensor (35) being able to detect light radiation reflected by one of the zones (18, 19) of the movable part (11), the second sensor (35) being disposed so that when one of the two sensors (17, 35) receives light radiation that is reflected by a diffusing zone (18), the other one of the two sensors (17, 35) is facing an absorbing zone (19) and vice versa.

10. The optical encoder according to any one of the preceding claims, **characterised in that** it comprises a plurality of sensors (41, 42) that are disposed so that they are all able to receive radiation that is reflected by the same diffusing zone (18).

11. The optical encoder according to any one of the preceding claims, **characterised in that** it comprises a light source (55) that is controlled by a signal originating from the sensor (17, 35; 41, 42) and allows information to be fed back to the user as a function of movements of the movable part (11).

12. The optical encoder according to claim 11, **characterised in that** the light source (55) that allows information to be fed back is disposed so as to emit light perpendicular to the plate (20) while passing through said plate.

13. The optical encoder according to any one of claims 11 or 12, **characterised in that** the light source (55) that allows information to be fed back emits in a wavelength band that is separate from that for which the sensor (26, 27) is configured.
